# EUROPÄISCHE PATENTSCHRIFT

(11) **EP 4 763 908 B1**
(45) Veröffentlichungstag und Bekanntmachung des Hinweises auf die Patenterteilung: **16.09.2026**
(21) Anmeldenummer: 24220556.5
(22) Anmeldetag: 17.12.2024
(51) Int. Cl.: C08L 7/00, B60C 1/00, C08L 9/00, C08L 9/06, C08L 21/00

(54) **KAUTSCHUKZUSAMMENSETZUNG**
RUBBER COMPOSITION
COMPOSITION DE CAOUTCHOUC

(43) Veröffentlichungstag der Anmeldung: 24.06.2026
(73) Patentinhaber: Bakelite GmbH, 58642 Iserlohn-Letmathe (DE)
(72) Erfinder: Schröter, Stephan, 45259 Essen (DE); Mindner, Michael, 58636 Iserlohn (DE)

(56) Entgegenhaltungen:
- RS-B1- 60 290
- US-A- 4 167 540
- US-A1- 2007 060 718
- US-A1- 2015 322 193

## Beschreibung

Die Erfindung betrifft eine Zusammensetzung zumindest ein Basispolymer und zumindest ein benzyliertes Alkylphenolharz enthaltend.

Bei der Herstellung von vielen Gummiartikeln ist es notwendig, dass die einzelnen Bauteile im unvulkanisierten Zustand eine gute Konfektionsklebrigkeit aufweisen, damit die Bauteile bis zur Vulkanisation in der gewünschten Position verbleiben. Um die Konfektionsklebrigkeit zu erhöhen, ist es seit langem bekannt, der Kautschukmischung so genannte Klebrigmacher-Harze zuzusetzen. Typische in der Kautschukindustrie eingesetzte Klebrigmacher-Harze sind z. B. Cumaron-Inden-Harze, Petroleumharze, Terpen-Phenol-Harze, Kolophonium-Harze oder Phenolharze.

Phenolharze sind bei der Herstellung von Gummiprodukten, insbesondere Reifenbestandteilen, bekannt. Neben der Erhöhung der Konfektionsklebrigkeit (z.B. US 3,962,156 ) bewirken Phenolharze im Endprodukt aufgrund der Ausbildung eines eigenen Netzwerkes eine Versteifung. Auch können sie als Vernetzer bei bestimmten Kautschuktypen, z. B. Butylkautschuk (DE 16 69 863 A1), verwendet werden. Sollen Kautschukmischungen zur Haftung an textilen oder metallischen Festigkeitsträgern eingesetzt werden, können Phenolharze die Anbindung an die Festigkeitsträger erhöhen (z.B. DE 30 33 711 A1).

US 4 167 540 A, US 2007/060718 A1, US 2025/322193 A1 und RS 60 290 B1 beschreiben die Verwendung von Alkylphenol-Harzen für Kautschukmischungen unter anderem auch zur Erhöhung der Konfektionsklebrigkeit.

Um bei der Verwendung von Phenolharzen sowohl verarbeitungstechnische Vorteile (z.B. Klebrigkeit) als auch Verbesserungen in den Eigenschaften des vulkanisierten Produktes zu erhalten, ist es wesentlich, die Verträglichkeit des Phenolharzes zur Kautschukkomponente zu erhöhen.

Der Erfindung liegt daher die Aufgabe zugrunde, eine Kautschukzusammensetzung bereitzustellen, bei der eine bessere Einarbeitung des Phenolharzes in die Kautschukmischung erfolgt und das Phenolharz eine gute Verträglichkeit zur Kautschukkomponente aufweist, was eine gute Konfektionsklebrigkeit und gleichzeitig eine hervorragende Verarbeitbarkeit der Kautschukzusammensetzung bedeutet.

Gelöst wird die Aufgabe erfindungsgemäß dadurch, dass die Zusammensetzung zumindest ein Basispolymer und zumindest ein benzyliertes Alkylphenol-Novolak-Harz enthält, wobei
a) das Basispolymer aus zumindest einer Kautschukkomponente ausgewählt ist und
b) das benzylierte Alkylphenol-Novolak-Harz durch Umsetzung des Alkylphenol-Novolak-Harzes mit einem Benzylierungsmittel hergestellt ist und dass die Zusammensetzung 0,1 bis 30 phr benzyliertes Alkylphenol-Novolak-Harz enthält.

Es wurde überraschenderweise festgestellt, dass durch die Verwendung des benzylierten Alkylphenol-Novolak-Harzes die Verträglichkeit zum Basispolymer aus zumindest einer Kautschukkomponente erhöht werden konnte. Dieser Effekt könnte darauf zurückzuführen sein, dass die Polarität des Harzes verringert werden konnte und somit die Anbindung zur unpolaren Kautschukkomponente verbessert wird. Das hat zur Folge, dass die Konfektionsklebrigkeit im Vergleich zu herkömmlichen Kautschukmischungen auf ähnlich hohem Niveau ist, wodurch die erfindungsgemäße Zusammensetzung insbesondere z. B. zur Herstellung von Reifenbestandteilen, wie Laufstreifen oder Seitenwänden, besonders geeignet ist. Ein weitere Grund dafür, dass die Konfektionsklebrigkeit sehr gut ist, ist, dass das benzylierte Alkylphenol-Novolak-Harz beim Mischvorgang in der Kautschukmischung komplett aufschmelzen kann, da das Harz einen niedrigeren Erweichungspunkt aufweist als z.B. nicht- benzylierte Alkylphenol-Novolak-Harze. Abgesehen von dem niedrigen Schmelzbereich der benzylierten Alkylphenol-Novolak-Harze hat sich weiterhin herausgestellt, dass die Modifikation des Alkylphenolharzes durch die Benzylierungsreaktion überraschenderweise auch die Schmelzviskosität des Harzes reduziert. Sowohl die Verringerung des Schmelzbereiches als auch die Reduktion des der Schmelzviskosität waren nicht zu erwarten, da die Molmasse durch die Benzylierungsreaktion erhöht wird, was üblicherweise einen höheren Erweichungsbereich und eine höhere Schmelzviskosität zur Folge hat. Durch die Absenkung des Schmelzbereiches und die Verringerung der Schmelzviskosität ergibt sich ein schnelleres Aufschmelzverhalten und somit schnellere Verteilung des benzylierten Alkylphenol-Novolak-Harzes in der Kautschukmischung. Auch können durch den niedrigeren Schmelzbereich der benzylierten Alkylphenol-Novolak-Harze die Mischer-bzw. Walzentemperaturen reduziert werden, was zur Energieeinsparung beitragen kann. Ebenso können gegebenenfalls umweltschädliche Emissionen beim Mischvorgang durch eine reduzierte Mischtemperatur vermindert werden.

Die erfindungsgemäße Zusammensetzung enthält als Basispolymer zumindest eine Kautschukkomponente. Bevorzugt ist, wenn die Kautschukkomponente aus der Gruppe der natürlichen und synthetischen Polyisoprenen, Styrol-Butadien-Copolymeren, insbesondere emulsionspolymerisierter Styrol-Butadien-Kautschuk und lösungspolymerisierter Styrol-Butadien-Kautschuk, Polybutadienen, Polyisobutylen, Isobuten-Isopren-Copolymeren, Acrylnitril-Butadien-Copolymeren und Polyoctenameren, Propylen-Ethylen-Copolymeren, Ethylen-Propylen-Dien-Copolymeren, Halobutylkautschuken, Chloroprenkautschuken, Isopren-Butadien-Copolymeren und/oder Styrol-Isopren-Butadien-Terpolymeren ausgewählt wird.

Diese Kautschukkomponenten, die auch gekoppelt und/oder modifiziert und/oder funktionalisiert sein können, sind aus dem Stand der Technik bekannt, lassen sich gut zu der erfindungsgemäßen Kautschukzusammensetzung verarbeiten und verleihen dem vulkanisierten Produkt, insbesondere Reifenbestandteilen, gute Eigenschaften.

Weitere mögliche Kautschukkomponenten können je nach Anwendungsgebiet des vulkanisierten Produktes z.B. auch Fluorkautschuke, Chlorsulfoniertes Polyethylen (CSM) und/oder EthylenVinylacetat-Copolymer (EVM) sein.

Besonders bevorzugt ist, ein emulsionspolymerisiertes Styrol-Butadien-Copolymer (ESBR) und/oder ein in Lösung polymerisiertes Styrol-Butadien-Copolymer (SSBR) als eine Kautschukkomponente zu verwenden. Es können die aus dem Stand der Technik bekannten Typen, die durch Copolymerisation von Styrol und 1,3-Butadien in wässriger Emulsion erhalten werden, zur Herstellung von ESBR verwendet werden. SSBR kann z. B. unter Verwendung von Lithiumalkylen im organischen Lösungsmittel hergestellt werden. Es können auch Mischungen aus ESBR und SSBR als Kautschukkomponente für die erfindungsgemäße Zusammensetzung eingesetzt werden. Die Styrol-Butadien-Copolymere können auch gekoppelt und endgruppenmodifiziert sein.

Weiterhin ist bevorzugt, wenn die Kautschukkomponente aus Polyisopren (IR, NR) ausgewählt ist. Dabei kann es sich sowohl um cis-1,4-Polyisopren als auch um 3,4-Polyisopren handeln. Bevorzugt ist dabei die Verwendung von cis-1,4-Polyisoprenen mit einem cis-1,4-Anteil > 90 Gew.-%. Synthetisch kann solch ein Polyisopren durch stereospezifische Polymerisation in Lösung mit Ziegler-Natta-Katalysatoren oder unter Verwendung von fein verteilten Lithiumalkylen erhalten werden. Bei Naturkautschuk (NR) handelt es sich um ein cis-1,4 Polyisopren mit einem cis-1,4-Anteil größer 99 Gew.

Vorteilhafterweise weist die erfindungsgemäße Zusammensetzung als Kautschukkomponente Polyutadien (BR) auf, wobei es sich dabei sowohl um cis-1,4- als auch um Vinyl-Polybutadien (10-90 Gew.-% Vinyl-Anteil) handeln kann. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Die erfindungsgemäße Zusammensetzung enthält als weitere Komponente zumindest ein benzyliertes Alkylphenol-Novolak-Harz, wobei dieses erhalten wird durch Umsetzung des Alkylphenol-Novolak-Harzes mit einem Benzylierungsmittel.

Unter Alkylphenol-Novolak-Harze werden anmeldungsgemäß Harze verstanden, die durch Kondensation zumindest eines Alkylphenols mit zumindest einem Aldehyd oder durch Addition zumindest eines Alkylphenols an ungesättigte Verbindungen (z.B. Alkene, Alkine, ungesättigte Harze) erzeugt werden. Die Herstellung des Alkylphenol-Novolak-Harzes kann aber auch unter Verwendung von Mischungen aus Alkylphenolen mit anderen Phenolen (z.B. Phenol, Kresole, Bisphenole) erfolgen, wobei in solchen Gemischen der Alkylphenol Anteil mindestens 70 % betragen sollte. So wurde festgestellt, dass Alkylphenol-Novolak-Harze, bei deren Herstellung Alkylphenol/Phenol-Gemische verwendet wurden bei wachsendem Anteil kurzkettiger Phenole im Gemisch die Konfektionsklebrigkeit vermindert wurde.

Alkylphenole werden durch Alkylierung von phenolischen Verbindungen hergestellt. Die phenolischen Verbindungen sind vorzugsweise ausgewählt aus der Gruppe aus unsubstituierten und substituierten Phenolen, wie z.B. Phenol, Kresolen, Brenzcatechin, Hydrochinon, Resorcin und/oder Bisphenolen, wie z.B. Bisphenol A und/oder Bisphenol F und/oder Cashew Nut Shell Liquid (CNSL).

Die Alkylierungsreaktion einschließlich der Alkylierungsmittel sind aus dem Stand der Technik bekannt. Erhalten werden Alkylphenole mit vorzugsweise C₄ bis C₁₂-Alkylketten (verzweigt oder unverzweigt). Die entsprechenden Alkylsubstituenten des Phenols können in para- oder ortho-Stellung zur OH-Gruppe angeordnet sein, wobei auch Mischungen aus o- und p- Alkylphenolen verwendet werden können. Bevorzugt ist die Verwendung von C₄ bis C₁₂ Alkylphenolen, insbesondere die Verwendung von Butylphenol-Isomeren und/oder tert. Butylphenol (bevorzugt p-tert. Butylphenol) und/oder Butylphenol und/oder Octylphenol-Isomeren und/oder tert. Octylphenol (bevorzugt p- tert. Ocylphenol) und/oder Octylphenol, und/oder Nonylphenol- und/oder Dodecylphenol- Isomeren, da diese Produkte leicht herstellbar und daher kommerziell einfach zugänglich sind.

Die Herstellung des Alkylphenol-Novolak-Harzes erfolgt durch Kondensation zumindest eines Alkylphenols mit zumindest einem Aldehyd , bevorzugt Formaldehyd, p-Formaldehyd, Acetaldehyd, Furfurylaldehyd oder Benzaldehyd. Das Alkylphenol wird im Mol-Verhältnis zum Aldehyd von 1 : 0,2 bis 1 : > 1,0, bevorzugt 1: 0,5 bis 1: 0,9, eingesetzt und ein saurer Katalysator verwendet. Durch das spezielle Molverhältnis werden feste Alkylphenol-Novolak-Harze mit einem Erweichungspunkt von größer 60 °C erhalten, die gut handhabbar sind. Als saure Katalysatoren werden üblicherweise z.B. Oxalsäure oder p-Toluolsulfonsäure, Benzolsulfonsäure, Salzsäure, Schwefelsäure, Phenolsulfonsäure und Metallsalze, Mischungen aus zwei oder mehr davon, eingesetzt. Auch diese Reaktion ist dem Fachmann bekannt. Weiterhin ist es möglich, dass das Alkylphenol mit einer ungesättigten Verbindung wie Alkene oder Alkine (z.B. Acetylen) oder ungesättigten Harzen (z.B. Terpen-Harze) über eine Additionsreaktion reagiert und somit ein Alkylphenol-Novolak-Harz hergestellt wird (z.B. S. Schröter: Klebharze, Hinterwaldner Verlag München, 1994, Seite 137 oder A, Gardziella, L.A. Pilato, A. Knop: Phenolic Resins, 2. Edition, Springer Verlag, 1999, Seite 22).

Es entstehen Alkylphenol-Novolak-Harze mit Alkylresten am Phenolring vorzugsweise in o- und/oder p-Stellung mit verzweigten und/oder unverzweigten Alkylresten mit vorzugsweise bis zu 12 C-Atomen.

Die Herstellung des benzylierten Alkylphenol-Novolak-Harzes wird durch Reaktion des Alkylphenol-Novolak-Harzes mit einem Benzylierungsmittel (beispielsweise in einem Mol-Verhältnis Alkylphenol-Novolak-Harz : Benzylierunsgmittel von 1 : 1,2 bis 1 : 2,4) vorzugsweise ausgewählt aus Benzylalkohol, Benzylchlorid, Benzylbromid, Benzylether und/oder deren Derivate im sauren Medium durchgeführt. Dabei wird das Alkylphenol-Novolak-Harz zusammen mit dem Benzylierungsmittel z.B. mit dem Benzylalkohol auf ca. 160 °C aufgeheizt. Danach werden 0,1 bis 1 % einer geeigneten Säure zugegeben (Oxalsäure, p-Toluolsulfonsäure, Benzolsulfonsäure, Salzsäure, Schwefelsäure, Phenolsulfonsäure, Phosphorsäure, Metallsalze , Mischungen aus zwei oder mehr davon). Das durch die Reaktion entstandene Wasser wird durch Destillation entfernt. Die Reaktion ist beendet, wenn ein Großteil des Benzylalkohols umgesetzt ist.

Es ist aber auch möglich, dass das Alkylphenol-Novolak-Harz als Schmelze vorliegt. Ebenso kann die Zugabe des Benzylierungsmittels über einen längeren Zeitraum erfolgen.

Eine beispielhafte Gleichung für die Umsetzung eines Alkylphenol-Novolak-Harzes mit Benzylalkohol soll hier schematisch gegeben werden: 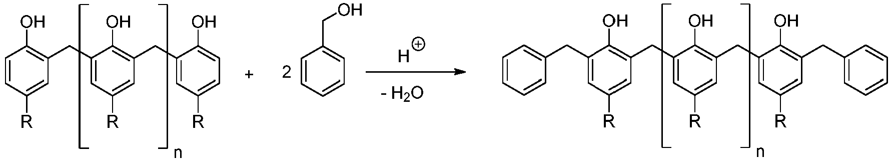 n: im Durchschnitt 0-20; R: verzweigte oder unverzweigte Alkylgruppen, bevorzugt C₄-C₁₂

Die erfindungsgemäße Zusammensetzung enthält in der bevorzugten Ausführungsform das benzylierte Alkylphenol-Novolak-Harz in einer Menge von 0,1 bis 30 phr (parts per hundred parts rubber by weight). Bei Anteilen größer 30 phr wurden die Eigenschaften des Vulkanisats verschlechtert. Vorzugsweise liegt der Anteil an eingesetztem benzylierten Alkylphenol-Novolak-Harz bei 1 bis 10 phr, besonders bevorzugt 2-6 phr. In diesem Bereich wurde ein ausgewogenes Verhältnis zwischen Verarbeitbarkeit, Konfektionsklebrigekit und Vulkanisateigenschaften erzielt.

Die erfindungsgemäße Zusammensetzung kann noch weitere übliche Zusatzstoffe in üblichen Konzentrationen wie z.B. weitere Harze, Verarbeitungshilfsmittel, Füllstoffe, Alterungsschutzmittel, Aktivatoren, Weichmacher, Vulkanisationshilfsmittel, und/oder Vulkanisationsbeschleuniger enthalten.

Als weitere Harze können z.B. Kohlenwasserstoffharze auf Basis von z.B. Terpenphenol, Polyterpen (Kolophonium), α-Limonen, β-Pinen, Inden-Cumaron-Harze, weitere Phenolharze oder Pentaerythritester in Betracht kommen, z.B. in einer Konzentration von 0 bis 20 phr. Ebenso sind Phenol-Novolake mit Hexamethylentetramin als Verstärkerharze geeignet, ggf. mit ca. 20 % Cashew-Nut-Shell-Liquid Anteil oder Tallöl modifiziert, um eine bessere Verträglichkeit mit der Kautschukkomponente herzustellen.

Als Verarbeitungshilfsmittel werden übliche Chemikalien, wie z.B. Stearinsäure, Faktis, Dispergatoren, Verarbeitungsöle, Wachse, Fette oder auch Metallsalze eingesetzt, um eine optimale Verarbeitung der Mischung für den jeweiligen Anwendungsbereich zu gewährleisten und entsprechende vulkanisierte Produkte mit den gewünschten Eigenschaften zu erhalten.

Die erfindungsgemäße Zusammensetzung weist in der Regel Füllstoffe auf, die verstärkend in der Kautschukmischung und/oder im vulkanisierten Produkt wirken, wie beispielsweise Ruß, Kieselsäure, Alumosilikate, Kreide, Stärke, Magnesiumoxid, Titandioxid oder Kautschukgele. Die Menge an Füllstoffen ist bevorzugt 0,1 phr bis 200 phr.

Besonders bevorzugt ist die Verwendung von Ruß und/oder Kieselsäure, bevorzugt in einer Menge von 0,1 phr bis 200 phr. Die verwendeten Ruße sind Ruße, wie sie allgemein in Kautschukmischungen eingesetzt werden. Bevorzugte Kieselsäuren sind fein verteilte, gefällte Kieselsäuren, die z. B. eine Stickstoffoberfläche (BET-Oberfläche) (gemäß DIN 66131 und 66132) von 35 bis 350 m2 , aufweisen. Derartige Kieselsäuren führen z.B. in Kautschukmischungen für Reifenlaufstreifen zu besonders guten physikalischen Eigenschaften der Vulkanisate. Dabei ist Zur Verbesserung der Verarbeitbarkeit und zur Anbindung der Kieselsäure an die Kautschukkomponente von Vorteil, wenn Kupplungsagenzien wie z. B. Silane als Zusatzstoffe der erfindungsgemäßen Zusammensetzung hinzugefügt werden.

Zu Alterungsschutzmitteln zählen, z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind.

Des Weiteren liegen in der Kautschukmischung übliche Aktivatoren vor. Diese Aktivatoren können Zinkoxid und Fettsäuren oder Zinkseifen auf Basis von Zinkoxid und Fettsäuren sein. Alternativ können Gemische aus Zinkoxid und Metallacrylat und/oder Metallmethacrylat eingesetzt werden. Diese werden bevorzugt in einer Menge von 0,1 bis 3,0 phr an Zinkoxid und in einer Menge von 0,1 bis 3,0 phr an Metallacrylat und/oder Metallmethacrylat eingesetzt.

Bevorzugt wird als Weichmacher Mineralöl eingesetzt, alternativ oder zusätzlich können auch flüssige Polymere verwendet werden, die sich u. a. als Ersatzstoffe für Mineralöle als Weichmacher eignen. Die Weichmacher, bevorzugt Mineralöle, werden in einer Menge von 1 bis 160 phr, wie 5 bis 75 phr, insbesondere 10 bis 60 phr eingesetzt. Die flüssigen Polymere, wie z.B. flüssiges Polybutadien, weisen entsprechend Mengen von 0 bis 160 phr, wenigstens aber 0,1 phr, wie 5 bis 75 phr, insbesondere 10 bis 60 phr auf.

Die Vulkanisation wird in der Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Generell sind aber auch andere Vulkanisiersysteme denkbar wie z.B. die auf Peroxiden beruhende.

Des Weiteren kann die Kautschukmischung andere vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Je nach Anwendungsbereich kann die erfindungsgemäße Zusammensetzung in ihren Bestandteilen variieren. So können sowohl die Kautschukkomponenten als auch das benzylierte Alkylphenol-Novolak-Harz so ausgewählt werden, dass die Eigenschaften des vulkanisierten Produktes optimiert werden können.

So wäre beispielweise für Reifenbestandteile, wie Laufstreifenmischungen oder Seitenwandmischungen eine Zusammensetzung folgende Bestandteile enthaltend, denkbar:
a) bis zu 100 phr BR, bevorzugt 10 - 80 phr
b) bis zu 100 phr NR, bevorzugt 10 bis 80 phr
c) bis zu 100 phr ESBR und/oder SSBR, bevorzugt 10 bis 100 phr
d) 0,1 bis 30 phr benzyliertes Alkylphenol-Novolak-Harz, bevorzugt 1 bis 10 phr, wiederum bevorzugt 2-6 phr
e) 0,1 bis 400 phr weitere Zusatzstoffe.

Die Herstellung der erfindungsgemäßen Zusammensetzung erfolgt auf herkömmliche Art und Weise in zwei Stufen, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird, z. B. mit einem ineinander geführten Innenmischer, und im Anschluss bei niedrigerer Temperatur durch Zugabe des Vulkanisationssystems die Fertigmischung auf einer Walze erzeugt wird. Die Mischung wird ausgetragen, abgekühlt und kann einige Tage bis zur endgültigen Vulkanisierung gelagert werden.

Soll die erzeugte Mischung als Seitenwand oder Laufstreifen für Reifen verwendet werden, wird dieser als Rohling auf den vorgefertigten Reifenrohling in bekannter Weise aufgebracht.

Generell ist aber auch möglich, die erfindungsgemäße Zusammensetzung für andere Reifenbestandteile zu verwenden.

Des Weiteren kann die erfindungsgemäße Zusammensetzung für eine Vielzahl von anderen Anwendungsgebieten von vernetzten Kautschukprodukten verwendet werden, wie z. B. zur Herstellung von technischen Gummiwaren, wie Dämpfungselemente, Gummimanschetten, Antriebsriemen, Dichtungen, Bälge und/oder Förderbänder. Dabei kann der Einsatz der erfindungsgemäßen Zusammensetzung auch in den Schichten erfolgen, die eine gute Haftung zu eingelegten Geweben oder Geflechten aus metallischen und/oder textilen Festigkeitsträgern haben müssen.

Anhand eines Ausführungsbeispiels soll die Erfindung näher erläutert werden.
a) Herstellung des Alkylphenol-Novolak-Harzes:
Die Herstellung des Alkylphenol-Novolak-Harz kann nach den bekannten Verfahren erfolgen. Das Alkylphenol (oder Mischungen von Alkylphenolen, ggf. auch mit Phenolen) wird ggf. aufgeschmolzen, ein saurer Katalysator zugegeben (z.B. Oxalsäure, p-Toluolsulfonsäure, Dodecylphenolsulfonsäure) und bei ca. 100 °C Formaldehyd über 1 h zudosiert. Anschließend erfolgt eine Nachreaktion von 1-3 h, bis der Formaldehyd-Gehalt auf < 1 % gesunken ist. Danach wird unter Normaldruck bis 160 °C und im Vakuum bis 170-220 °C destilliert. Die Harzschmelze wird ausgegossen und abgekühlt.
Entsprechend Tabelle 3 wurden als Alkylphenole p-tert. Butylphenol, p-tert. Octylphenol, iso-Nonylphenol verwendet, wobei die Herstellung des entsprechenden Alkylphenol-Novolak-Harzes unter dem angegebene Molverhältnis (MV) Alkylphenol : Formaldehyd) erfolgte (Tabelle 3: Verbindungen I, III, V, VII).

b) Herstellung eines benzylierten Alkylphenol-Novolak-Harzes:
Der Alkylphenol-Novolak hergestellt unter a) wird mit einer entsprechenden Menge Benzylalkohol (Mol-Verhältnis: Alkylphenol- Novolak-Harz zu Benzylalkohol 1 : 1,8) versetzt und auf 140-160 °C aufgeheizt. Es erfolgt die Zugabe einer Sulfonsäure oder Schwefelsäure. Man lässt bei 140-160 °C für ca. 2-6 h reagieren, bis der Benzylalkohol-Gehalt nennenswert gesunken ist. Das gebildete Wasser kann ggf. gleichzeitig entfernt werden. Anschließend erfolgt eine Vakuumdestillation bis 170-220 °C zur Entfernung des Wassers. Die Harzschmelze wird ausgegossen und abgekühlt.
Entsprechend Tabelle 3 wurden die Verbindungen II, IV, VI und VIII so hergestellt.

c) Zusammensetzung und Herstellung der erfindungsgemäßen Zusammensetzung für eine Reifenseitenwandmischung

**Tabelle 1**

| Bestandteil | Anteil [phr] | |
|---|---|---|
| **Reifenseitenwand-Mischung** | Vergleich | Erfindungsgemäß |
| | **A** | **B** |
| Naturkautschuk R RSS1 | 40,0 | 40,0 |
| Cis-BR Buna CB 22 | 60,0 | 60,0 |
| Ruß N660 | 50,0 | 50,0 |
| Weichmacher (Treated Distillate Aromatic Extract (TDAE)) | 5,0 | 5,0 |
| Zinkoxid | 3,0 | 3,0 |
| Alterungsschutzmittel (6PPD Vulkanox^{®} 4020) | 2,0 | 2,0 |
| Alterungsschutzmittel (TMQ Vulkanox^{®} HS) | 1,5 | 1,5 |
| Wachs Antilux^{®} 500 | 2,0 | 2,0 |
| Alkylphenol-Novolak-Harz hergestellt nach a): | 4,00 | - |
| **I entsprechend Tabelle 3: p-tert. Butylphenol-Novolak-Harz (MV = 1:0,80)** | | |
| benzyliertes Alkylphenol-Novolak-Harz hergestellt nach b): | - | 4,00 |
| **II entsprechend Tabelle: benzyliertes p-tert. Butylphenol-Novolak-Harz (MV = 1:0,80)** | | |

| | | |
|---|---|---|
| Mischfolge: 0 - 0,5 min Kautschukkomponente 0,5 - 1,5 min 2/3 Ruß, Zinkoxid, Harz, Wachs, 6PPD, TMQ 1,5 - 3,0 min 1/3 Ruß und Weichmacher 5,0 - 6,0 min Drehzahl auf 70 rpm erhöhen, Temperaturziel 120 °C erreichen | | |

Die Bestandteile wurden in einem vortemperierten Kneter bei einer Rotordrehzahl von 40 rpm 3 min miteinander vermischt. Anschließend wurde die Rotordrehzahl auf 70 rpm erhöht und die Mischung bei einer Temperatur von 120 °C ausgeworfen. Die Mischung wurde auf einem Walzwerk homogenisiert, abgekühlt auf 60 °C und folgende Bestandteile eingemischt

| | | |
|---|---|---|
| Schwefel | 2,0 | 2,0 |
| Beschleuniger Rhenogran^{®} CBS 80 | 1,25 | 1,25 |
| Beschleuniger Rhenogran^{®} DPG 80 GE | 0,3 | 0,3 |
| Verzögerer Vulcalent^{®} E/C | 0,3 | 0,3 |

d) Zusammensetzung und Herstellung der erfindungsgemäßen Zusammensetzung für eine PKW-Laufflächenmischung

**Tabelle 2**

| Bestandteil | Anteil [phr] | | Anteil [phr] | |
|---|---|---|---|---|
| PKW-Laufflächen-Mischung | Vergleich | Erfindungsgemäß | Vergleich | Erfindungsgemäß |
| | **C** | **D** | **E** | **F** |
| SBR Buna 1500 | 100 | 100 | 100 | 100 |
| Ruß N220 | 70 | 70 | 70 | 70 |
| Weichmacher (Treated Distillate Aromatic Extr.(TDAE)) | 30 | 30 | 30 | 30 |
| Zinkoxid | 3 | 3 | 3 | 3 |
| Alterungsschutzmittel (6PPD Vulkanox^{®} 4020) | 2 | 2 | 2 | 2 |
| Alterungsschutzmittel (TMQ Vulkanox^{®} HS) | 2 | 2 | 2 | 2 |
| Alkylphenol-Novolak-Harz hergestellt nach a): | 4 | | | |
| **I entsprechend Tabelle 3:** p-tert. Butylphenol-Novolak-Harz (MV= 1 : 0,80) | | | | |
| Alkylphenol-Novolak-Harz hergestellt nach a): | | | 4 | |
| **V entsprechend Tabelle 3:** Nonylphenol-Novolak-Harz (MV = 1 : 0,89) | | | | |
| benzyliertes Alkylphenol-Novolak-Harz hergestellt nach b): | | 4 | | |
| **II entsprechend Tabelle 3:** benzyliertes p-tert. Butylphenol-Novolak-Harz (MV = 1 : 0,80) | | | | |
| benzyliertes Alkylphenol-Novolak-Harz hergestellt nach b): | | | | 4 |
| **VI entsprechend Tabelle 3:** benzyliertes Nonylphenol-Novolak-Harz (MV = 1 : 0,89) | | | | |

| | | | | |
|---|---|---|---|---|
| Mischfolge: 0 - 1,0 min Kautschukkomponente 1,0 - 4,0 min 2/3 Ruß, Zinkoxid, Harz, 6PPD, TMQ 4,0 - 6,5 min 1/3 Ruß und Weichmacher 5,0 - 6,5 min Drehzahl auf 70 rpm erhöhen, Temperaturziel 120 °C erreichen | | | | |

Die Bestandteile wurden in einem vortemperierten Kneter bei einer Rotordrehzahl von 40 rpm 3 min miteinander vermischt. Anschließend wurde die Rotordrehzahl auf 70 rpm erhöht und die Mischung bei einer Temperatur von 120 °C ausgeworfen. Die Mischung wurde auf einem Walzwerk homogenisiert, abgekühlt auf 60 °C und folgende Bestandteile eingemischt:

| | | | | |
|---|---|---|---|---|
| Schwefel | 1,75 | 1,75 | 1,75 | 1,75 |
| Beschleuniger Rhenogran^{®} CBS 80 | 1,25 | 1,25 | 1,25 | 1,25 |
| Beschleuniger Rhenogran^{®} DPG 80 GE | 0,3 | 0,3 | 0,3 | 0,3 |
| Verzögerer Vulcalent^{®} E/C | 0,3 | 0,3 | 0,3 | 0,3 |

Die nach a) und b) hergestellten benzylierten bzw. nicht-benzylierten Alkylphenol-Novolak-Harze und die unter c) und d) hergestellten Zusammensetzungen wurden verschiedenen Tests (siehe Tabelle 3) unter folgenden Bedingungen unterzogen:
a) Schmelzviskosität: ISO 2884-1
b) Schmelzbereich Kapillar Methode [°C], R&K Methode [°C]: DIN EN ISO 3146, DIN ISO 4625
c) OH-Zahl [mg KOH/g]: DIN 53240
d) Wassergehalt [%]: Karl-Fischer-Methode, DIN 51777
e) Messung freies Alkylphenol [%] mittels Gaschromatographie
f) Klebrigkeitsmessung
   Die Prüfungen der Klebrigkeit der Mischung erfolgte gegen sich selbst im Hock-Tester. Hierzu wurden die Mischungen zu Fellen ausgewalzt und jeweils nach einem Tag oder nach 5 Tagen Lagerung getestet. Der Test erfolgte bei Raumtemperatur bei einer Kontaktkraft bei 50 N und einer Andruckdauer von 10 s. Es wurde eine 5-fach Bestimmung durchgeführt.

**Tabelle 3**

| | **I-Vergleich hergestellt nach a)** | **II-Erfindung hergestellt nach b)** | **III-Vergleich hergestellt nach a)** | **IV-Erfindung hergestellt nach b)** | **V-Vergleich hergestellt nach a)** | **VI-Erfindung hergestellt nach b)** | **VII-Vergleich hergestellt nach a)** | **VIII-Erfindung hergestellt nach b)** |
|---|---|---|---|---|---|---|---|---|
| | p-tert. Butylphenol | p-tert. Butylphenol benzyliert | p-tert. Octylphenol | p-tert. Octylphenol benzyliert | iso-Nonylphenol | iso-Nonylphenol benzyliert | p-tert. Butylphenol | p-tert. Butylphenol benzyliert |
| MV (Alkylphenol zu HCHO) | 0,80 | 0,80 | 0,80 | 0,80 | 0,89 | 0,89 | 0,70 | 0,70 |
| Schmelzviskosität 175 °C [mPas] | 2240 | 610 | 310 | 300 | 1240 | 1000 | 140 | - |
| Schmelzviskosität 150 °C [mPas] | - | - | 1920 | 1560 | 8320 | 5120 | 1400 | 520 |
| Schmelzbereich Kapillar Methode [°C] | 122/125 | 107/110 | 80/83 | 72/75 | 81/84 | 70/73 | 97/100 | 81/84 |
| Schmelzbereich R&K Methode [°C] | 139 | 125 | 98 | 91 | Nicht gemessen | Nicht gemessen | Nicht gemessen | Nicht gemessen |
| OH-Zahl [mg KOH/g] | 351 | 319 | 259 | 228 | Nicht gemessen | Nicht gemessen | Nicht gemessen | Nicht gemessen |
| Wassergehalt [%] | 0,04 | 0,02 | 0,26 | 0,06 | 0,38 | 0,02 | 0,15 | 0,19 |
| Butylphenol-Gehalt [%] | 1,37 | 0,04 | - | - | - | - | 4,27 | 0,13 |
| Octylphenol-Gehalt [%] | - | - | 2,44 | 0,57 | - | - | - | - |
| Nonylphenol-Gehalt [%] | - | - | - | - | 0,17 | < 0,1 | - | - |
| | | | | | | | | |

| **Seitenwand-Mischung** | **A** | **B** | | | | | | |
|---|---|---|---|---|---|---|---|---|
| Tack am 1. Tag | 137 | 136 | | | | | | |
| Tack am 5. Tag | 132 | 121 | | | | | | |

| **Laufflächen-Mischung** | **C** | **D** | | | **E** | **F** | | |
|---|---|---|---|---|---|---|---|---|
| Tack am 1. Tag | 152 | 144 | | | 141 | 138 | | |
| Tack am 5. Tag | 149 | 145 | | | 125 | 118 | | |

Aus den Ergebnissen der Tabelle 3 geht hervor, dass bei den erfindungsgemäßen benzylierten Alkylphenol-Novolak-Harzen II, IV, VI und VIII, die Schmelzviskosität sowohl gemessen bei 150 °C als auch bei 175 °C sowie die Schmelzbereiche geringer sind, als die nicht-benzylierten Alkylphenol-Novolak-Harze I, III, V und VII. Dieser Effekt war für den Fachmann überraschend, weil die Molmasse durch die Benzylierungsreaktion steigt und somit höhere Viskositäten und Schmelzbereiche zu erwarten waren.

Die Verringerung der Schmelzviskosität und auch des Schmelzbereiches haben - wie bereits eingangs ausgeführt - einen positiven Einfluss auf die Verarbeitbarkeit der Mischung. Damit einher geht eine zeit- und energiesparendere Bereitstellung der Kautschukmischung und gleichzeitig kann die Lebensdauer der Misch- und Werkzeuge erhöht werden. Die Mischungen können bei niedrigerer Temperatur hergestellt werden, wodurch die Emission gefährdender Gase verringert wird, was eine umwelt- und auch arbeitsschutzverträgliche Herstellung der erfindungsgemäßen Zusammensetzung ermöglicht.

Durch DMA-Messungen wurden Glasübergangstemperaturen (T_{G}-Werte) und tan-delta-Werte bei 0 °C und 60 °C ermittelt, die belegen, dass die Nassrutscheigenschaften bzw. der Rollwiderstand der vulkanisierten Zusammensetzungen, die benzylierte Alkylphenol-Novolak-Harze enthielten nahezu identisch der Zusammensetzungen waren, die unbenzylierten Alkylphenol-Novolak-Harze aufwiesen.

## Patentansprüche

1. Zusammensetzung zumindest ein Basispolymer und zumindest ein benzyliertes Alkylphenol-Novolak-Harz enthaltend, wobei
a) das Basispolymer aus zumindest einer Kautschukkomponente ausgewählt ist und
b) das benzylierte Alkylphenol-Novolak-Harz durch Umsetzung des Alkylphenol-Novolak-Harzes mit einem Benzylierungsmittel hergestellt ist und dass die Zusammensetzung 0,1 bis 30 phr benzyliertes Alkylphenol-Novolak-Harz enthält.

2. Zusammensetzung nach Anspruch 1, **dadurch gekennzeichnet, dass** die Kautschukkomponente aus der Gruppe der natürlichen und synthetischen Polyisoprenen, Styrol-Butadien-Copolymeren, Polybutadienen, Polyisobutylenen, Isobuten-Isopren-Copolymeren, Acrylnitril-Butadien-Copolymeren und Polyoctenameren, Propylen-Ethylen-Copolymeren, Ethylen-Propylen-Dien-Copolymeren, Halobutylkautschuken, Chloroprenkautschuken, Isopren-Butadien-Copolymeren und/oder Styrol-Isopren-Butadien-Terpolymeren ausgewählt ist.

3. Zusammensetzung nach Anspruch 1 und/oder Anspruch 2, **dadurch gekennzeichnet, dass** das benzylierte Alkylphenol-Novolak-Harz hergestellt ist mittels Benzylierung eines Alkylphenol-Aldehyd-Harzes.

4. Zusammensetzung nach Anspruch 1 und/oder Anspruch 2, **dadurch gekennzeichnet, dass** das benzylierte Alkylphenol-Novolak-Harz hergestellt ist mittels Benzylierung eines Alkylphenol-Acetylen-Harzes.

5. Zusammensetzung nach zumindest einem der vorhergehenden Ansprüche, **dadurch gekennzeichnet, dass** das benzylierte Alkylphenol-Novolak-Harz hergestellt ist unter Verwendung eines C₄-C₁₂ Alkylphenols.

6. Zusammensetzung nach Anspruch 5, **dadurch gekennzeichnet, dass** das verwendete Alkylphenol Butylphenol-Isomere und/oder tert. Butylphenol und/oder Butylphenol und/oder Octylphenol-Isomere und/oder tert. Octylphenol und/oder Octylphenol und/oder Nonylphenol- und/oder Dodecylphenol- Isomere ist.

7. Zusammensetzung nach zumindest einem der vorhergehenden Ansprüche, **dadurch gekennzeichnet, dass** sie weitere Zusatzstoffe wie z.B. weitere Harze, Verarbeitungshilfsmittel, Füllstoffe, Alterungsschutzmittel, Aktivatoren, Weichmacher, Vulkanisationshilfsmittel, und/oder Vulkanisationsbeschleuniger enthält.

8. Zusammensetzung nach Anspruch 1, **dadurch gekennzeichnet, dass** die Zusammensetzung 1-10 phr phr benzyliertes Alkylphenol-Novolak-Harz enthält.

9. Zusammensetzung nach Anspruch 8, **dadurch gekennzeichnet, dass** die Zusammensetzung 2 bis 6 phr benzyliertes Alkylphenol-Novolak-Harz enthält.

10. Zusammensetzung nach zumindest einem der vorhergehenden Ansprüche folgende Bestandteile aufweisend:
a) bis zu 100 phr BR, bevorzugt 10 - 80 phr
b) bis zu 100 phr NR, bevorzugt 10 bis 80 phr
c) bis zu 100 phr ESBR und/oder SSBR, bevorzugt 10 bis 100 phr
d) 0,1 bis 30 phr benzyliertes Alkylphenol-Novolak-Harz, bevorzugt 1 bis 10 phr, wiederum bevorzugt 2-6 phr und
e) 0,1 bis 400 phr weitere Zusatzstoffe.

11. Verwendung der Zusammensetzung nach zumindest einem der vorhergehenden Ansprüche zur Herstellung von vernetzten Kautschukprodukten.

12. Verwendung der Zusammensetzung nach Anspruch 11 zur Herstellung von Reifenbestandteilen, insbesondere Reifenseitenwände und Reifenlaufstreifen.

## Claims

1. Composition containing at least one base polymer and at least one benzylated alkylphenol novolak resin, wherein
a) the base polymer is selected from at least one rubber component and
b) the benzylated alkylphenol novolak resin has been prepared by reacting the alkylphenol novolak resin with a benzylating agent and that the composition contains 0,1 to 30 phr benzylated alkylphenol novolak resin.

2. Composition according to Claim 1, **characterized in that** the rubber component is selected from the group of the natural and synthetic polyisoprenes, styrene-butadiene copolymers, polybutadienes, polyisobutylenes, isobutene-isoprene copolymers, acrylonitrile-butadiene copolymers and polyoctenamers, propylene-ethylene copolymers, ethylene-propylene-diene copolymers, halobutyl rubbers, chloroprene rubbers, isoprene-butadiene copolymers and/or styrene-isoprene-butadiene terpolymers.

3. Composition according to Claim 1 and/or Claim 2, **characterized in that** the benzylated alkylphenol novolak resin has been prepared by benzylation of an alkylphenol aldehyde resin.

4. Composition according to Claim 1 and/or Claim 2, **characterized in that** the benzylated alkylphenol novolak resin has been prepared by benzylation of an alkylphenol acetylene resin.

5. Composition according to at least one of the preceding claims, **characterized in that** the benzylated alkylphenol novolak resin has been prepared using a C₄-C₁₂-alkyl phenol.

6. Composition according to Claim 5, **characterized in that** the alkylphenol used is butylphenol isomers and/or tert-butylphenol and/or butylphenol and/or octylphenol isomers and/or tert-octylphenol and/or octylphenol and/or nonylphenol isomers and/or dodecylphenol isomers.

7. Composition according to at least one of the preceding claims, **characterized in that** it contains other additives such as other resins, processing aids, fillers, ageing inhibitors, activators, plasticizers, vulcanization aids and/or vulcanization accelerants.

8. Composition according to Claim 1, **characterized in that** the composition contains 1-10 phr of benzylated alkylphenol novolak resin.

9. Composition according to Claim 8, **characterized in that** the composition contains 2 to 6 phr of benzylated alkylphenol novolak resin.

10. Composition according to at least one of the preceding claims, comprising the following constituents:
a) up to 100 phr of BR, preferably 10 - 80 phr
b) up to 100 phr of NR, preferably 10 bis 80 phr
c) up to 100 phr of ESBR and/or SSBR, preferably 10 bis 100 phr
d) 0.1 bis 30 phr of benzylated alkylphenol novolak resin, preferably 1 to 10 phr, in turn preferably 2-6 phr, and
e) 0.1 to 400 phr of other additives.

11. Use of the composition according to at least one of the preceding claims for manufacturing crosslinked rubber products.

12. Use of the composition according to Claim 11 for manufacturing tyre parts, in particular tyre side walls and tyre treads.

## Revendications

1. Composition contenant au moins un polymère de base et au moins une résine alkylphénol-novolaque benzylée,
a) le polymère de base étant choisi parmi au moins un composant de caoutchouc et
b) la résine alkylphénol-novolaque benzylée étant préparée par transformation de la résine alkylphénol-novolaque avec un agent de benzylation et la composition contenant 0,1 à 30 pcc de résine alkylphénol-novolaque benzylée.

2. Composition selon la revendication 1, **caractérisée en ce que** le composant de caoutchouc est choisi dans le groupe des polyisoprènes naturels et synthétiques, des copolymères de styrène-butadiène, des polybutadiènes, des polyisobutylènes, des copolymères d'isobutène-isoprène, des copolymères d'acrylonitrile-butadiène et des polyocténamères, des copolymères de propylène-éthylène, des copolymères d'éthylène-propylène-diène, des caoutchoucs butyle halogénés, des caoutchoucs de chloroprène, des copolymères d'isoprène-butadiène et/ou des terpolymères de styrène-isoprène-butadiène.

3. Composition selon la revendication 1 et/ou la revendication 2, **caractérisée en ce que** la résine alkylphénol-novolaque benzylée est préparée par benzylation d'une résine alkylphénol-aldéhyde.

4. Composition selon la revendication 1 et/ou la revendication 2, **caractérisée en ce que** la résine alkylphénol-novolaque benzylée est préparée par benzylation d'une résine alkylphénol-acétylène.

5. Composition selon au moins l'une des revendications précédentes, **caractérisée en ce que** la résine alkylphénol-novolaque benzylée est préparée à l'aide d'un C₄-C₁₂-alkylphénol.

6. Composition selon la revendication 5, **caractérisée en ce que** l'alkylphénol utilisé est constitué par des isomères de butylphénol et/ou du tert-butylphénol et/ou du butylphénol et/ou des isomères d'octylphénol et/ou du tert-octylphénol et/ou de l'octylphénol et/ou des isomères de nonylphénol et/ou de dodécylphénol.

7. Composition selon au moins l'une des revendications précédentes, **caractérisée en ce qu'**elle contient d'autres adhésifs comme par exemple d'autres résines, adjuvants de transformation, charges, agents de protection contre le vieillissement, activateurs, plastifiants, adjuvants de vulcanisation et/ou accélérateurs de vulcanisation.

8. Composition selon la revendication 1, **caractérisée en ce que** la composition contient 1-10 pcc de résine alkylphénol-novolaque benzylée.

9. Composition selon la revendication 8, **caractérisée en ce que** la composition contient 2 à 6 pcc de résine alkylphénol-novolaque benzylée.

10. Composition selon au moins l'une des revendications précédentes, présentant les constituants suivants :
a) jusqu'à 100 pcc de BR, de préférence 10 - 80 pcc
a) jusqu'à 100 pcc de NR, de préférence 10 - 80 pcc
a) jusqu'à 100 pcc d'ESBR et/ou de SSBR, de préférence 10 - 100 pcc
d) 0,1 à 30 pcc de résine alkylphénol-novolaque benzylée, de préférence 1 à 10 pcc, plus préférablement 2 à 6 pcc et
e) 0,1 à 400 pcc d'autres additifs.

11. Utilisation de la composition selon au moins l'une des revendications précédentes pour la fabrication de produits caoutchouteux réticulés.

12. Utilisation de la composition selon la revendication 11 pour la fabrication de composants de pneumatique, en particulier de flancs de pneumatique et de bandes de roulement de pneumatique.
